(19) Europäisches Patentamt
European Patent Office
Office européen des brevets

(11) **EP 3 432 528 A1**

(12) **EUROPÄISCHE PATENTANMELDUNG**

(43) Veröffentlichungstag:
**23.01.2019 Patentblatt 2019/04**

(51) Int Cl.:
*H04L 12/841* (2013.01)     *H04L 12/851* (2013.01)

(21) Anmeldenummer: **17182300.8**

(22) Anmeldetag: **20.07.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Götz, Franz-Josef**
**91180 Heideck (DE)**
• **Kießling, Marcel**
**91235 Velden (DE)**
• **Schmitt, Jürgen**
**90766 Fürth (DE)**

(54) **JITTERFREIE DATENÜBERTRAGUNG VON DATENPAKETEN**

(57)     Ein Datenübertragungsnetz weist Datenquellen (3a) und Datensenken (3b) auf, die über Knotenpunkte (1a bis 1d) miteinander verbunden sind. Zum Übertragen eines Datenpakets (P) von einer Datenquelle (3a) zu einer Datensenke (3b) übermittelt die Datenquelle (3a) das Datenpaket (P) an einen angrenzenden Knotenpunkt (1a). Der Knotenpunkt (1a) nimmt das Datenpaket (P) entgegen und leitet es an einen anderen Knotenpunkt (1b) weiter, bis ein an die Datensenke (3b) angrenzender Knotenpunkt (1d) das Datenpaket (P) an die Datensenke (3b) übermittelt. Die Datenquelle (3a) und die das Datenpaket (P) entgegennehmenden Knotenpunkte (1a bis 1d) leiten das Datenpaket (P) zu einem jeweiligen Sendezeitpunkt (T10 bis T50) an den jeweils nächsten Knotenpunkt (1a) bzw. an die Datensenke (3b) weiter. Zumindest ein Teil der Datenpakete (P) sind geschützte Datenpakete. Bei ihnen weist eine jeweilige Zeitdifferenz (Ta bis Td) zwischen dem Sendezeitpunkt (T20 bis T50) des jeweiligen Knotenpunkts (1a bis 1d) und dem Sendezeitpunkt (T20 bis T40) des vorhergehenden Knotenpunkts (1a bis 1c) bzw. der Datenquelle (3a) einen jeweiligen vorbestimmten Wert auf.

FIG 2

**Beschreibung**

Die vorliegende Erfindung geht aus von einem Betriebsverfahren für ein Datenübertragungsnetz, das eine Anzahl von Datenquellen und eine Anzahl von Datensenken aufweist, die über eine Mehrzahl von Knotenpunkten des Datenübertragungsnetzes miteinander verbunden sind,

- wobei zum Übertragen eines jeweiligen Datenpakets von der jeweiligen Datenquelle zur jeweiligen Datensenke

   -- die jeweilige Datenquelle das jeweilige Datenpaket über eine Verbindungsleitung an einen an die jeweilige Datenquelle angrenzenden jeweiligen Knotenpunkt des Datenübertragungsnetzes übermittelt,
   -- der an die jeweilige Datenquelle angrenzende jeweilige Knotenpunkt das Datenpaket entgegennimmt und an einen anderen Knotenpunkt weiterleitet usw.,
   -- bis ein an die jeweilige Datensenke angrenzender jeweiliger Knotenpunkt das jeweilige Datenpaket an die jeweilige Datensenke übermittelt,

- wobei die jeweilige Datenquelle und die das jeweilige Datenpaket entgegennehmenden Knotenpunkte das jeweilige Datenpaket zu einem jeweiligen Sendezeitpunkt an den an die jeweilige Datenquelle angrenzenden jeweiligen Knotenpunkt, an den jeweiligen anderen Knotenpunkt bzw. an die jeweilige Datensenke weiterleiten,
- wobei zumindest ein Teil der Datenpakete geschützte Datenpakete sind.

Die vorliegende Erfindung geht weiterhin aus von einem Datenübertragungsnetz, das eine Anzahl von Datenquellen und eine Anzahl von Datensenken aufweist, die über eine Mehrzahl von Knotenpunkten des Datenübertragungsnetzes miteinander verbunden sind, wobei die Datenquellen und die Knotenpunkte derart parametriert sind, dass sie im Betrieb gemäß einem derartigen Betriebsverfahren miteinander zusammenwirken.

Datenübertragungsnetze werden im Stand der Technik immer stärker auch im Rahmen von industriellen Steuerungsaufgaben eingesetzt. Hierbei werden von Sensoren eines verteilten Steuerungssystems Zustände eines gesteuerten industriellen Prozesses (beispielsweise einer Bearbeitungsmaschine) erfasst und über das Datenübertragungsnetz an eine Zentraleinheit des verteilten Steuerungssystems übermittelt. Die Zentraleinheit ermittelt anhand der übermittelten Zustände (gegebenenfalls in Verbindung mit internen Zuständen der Zentraleinheit wie Timern und Merkern) Steuersignale für den industriellen Prozess und übermittelt sie an Aktoren des verteilten Steuerungssystems. Die Aktoren steuern sodann den industriellen Prozess entsprechend den an sie übermittelten Steuersignalen. Diese Vorgehensweise wird zyklisch mit einer Periode wiederholt, wobei die Periode in der Regel im Bereich unterhalb 1 s liegt, oftmals unter 100 ms, beispielsweise bei 20 ms. Es ist daher von essenzieller Bedeutung, dass die Datenübermittlung von den Sensoren zur Zentraleinheit und von der Zentraleinheit zu den Aktoren schnell und zuverlässig erfolgt. Das Datenübermittlungsnetz muss somit den maximalen Zeitversatz der Datenübertragung gewährleisten.

Die Qualität einer derartigen Datenübermittlung (oftmals als QoS = quality of service) bezeichnet wird oftmals nicht nur durch den maximalen Zeitversatz als solchen (die Latenzzeit) charakterisiert, sondern zusätzlich auch durch die Variation der Latenzzeit, den sogenannten Jitter. Jitter wird insbesondere dadurch verursacht, dass bei einem Knotenpunkt des Datenübertragungsnetzes über mehrere Pfade Datenpakete eintreffen können, wobei das Eintreffen der Datenpakete bei dem betreffenden Knotenpunkt sich zeitlich überschneidet. In diesem Fall muss der betreffende Knotenpunkt das später eintreffende Datenpaket puffern, sofern er dies kann. Das Puffern führt zu einem zusätzlichen Zeitverzug. Wenn der betreffende Knotenpunkt das später eintreffende Datenpaket nicht puffern kann, geht das Datenpaket sogar verloren und muss von der dieses Datenpaket aussendenden Datenquelle nochmals gesendet werden.

Derartige Probleme bestehen vom Ansatz her bereits bei dedizierten Datenübertragungsnetzen, die ausschließlich für die Kommunikation der Sensoren, der Zentraleinheit und der Aktoren des verteilten Steuerungssystems genutzt werden. In noch viel größerem Umfang bestehen derartige Probleme bei Datenübertragungsnetzen, die zusätzlich auch anderweitig genutzt werden. Ein Beispiel eines derartigen Datenübertragungsnetzes ist ein Ethernet.

Innerhalb gewisser Grenzen können die Probleme dadurch gelöst werden, dass die Zustände und die Steuersignale hochprior über das Datenübertragungsnetz übermittelt werden, während der übrige Datenverkehr niederprior erfolgt. Diese Vorgehensweise ist jedoch dann nicht mehr praktizierbar, wenn mehrere verteilte Steuerungssysteme ein und dasselbe Datenübertragungsnetz nutzen oder wenn aus anderen Gründen anderer Datenverkehr ebenfalls hochprior eingestuft wird.

Die genannten Sachverhalte können - bezogen auf das verteilte Steuerungssystem - zu einer deutlichen Vergrößerung der Schwankung der Latenzzeit von Periode zu Periode führen. Weiterhin führen sie zu einer deutlich erhöhten Komplexität für die Ermittlung des Worstcase-Szenarios.

Je höher die Anforderungen sind, die an die Dynamik eines Steuerungssystems gestellt werden, desto niedriger muss die maximale Latenzzeit sein. Typischerweise wird dies dadurch erreicht, dass die Übermittlung der Datenpakete zeitlich koordiniert wird. Alternativ wird den zeitkritischen Datenpaketen (welche die Zustände und die Steuersignale übermitteln) eine möglichst hohe Priorität zugeordnet und die Interferenz zwischen verschiedenen Datenpaketen so gut wie möglich vermieden und reduziert.

Bei der Koordinierung der Übermittlung der Datenpakete wird üblicherweise in einem periodisch sich wiederholenden Zeitfenster des Datenübertragungsnetzes ein vorbestimmter Teilbereich für die Übermittlung der zeitkritischen Datenpakete reserviert. In diesem Teilbereich erfolgt ausschließlich die Übermittlung der zeitkritischen Datenpakete. Aller anderer Datenverkehr ist in diesem Teilbereich gesperrt. Im verbleibenden Teil des Zeitfensters erfolgen dann die übrigen Datenübertragungen. Interferenzen des Datenverkehrs der zeitkritischen Datenpakete untereinander werden dadurch vermieden, dass den einzelnen Datenquellen innerhalb des jeweiligen Teilbereichs bestimmte Sendezeiträume zugeordnet werden. Die Latenzzeit für die Datenübermittlung als solche und die Ungenauigkeiten der Übertragungszeiten müssen hierbei berücksichtigt sein. Dies erfolgt oftmals dadurch, dass Sicherheitsmargen eingeführt werden.

Diese Art der Koordinierung erfordert eine zuverlässige und einheitliche Zeitbasis in jeder an der Datenübermittlung beteiligten Datenquelle und in jedem an der Datenübermittlung beteiligten Knotenpunkt. Eine hochgenaue Synchronisierung der Datenquellen und der Knotenpunkte ist daher eine unabdingbare Voraussetzung für die Implementierung dieser Vorgehensweise.

Bei der hohen Priorisierung der zeitkritischen Datenpaketen in Kombination mit der Vermeidung von Interferenzen zwischen verschiedenen Datenpaketen können oftmals die Latenzzeit und deren Variation dadurch reduziert werden, dass ein Verdrängungsmechanismus implementiert wird. Beispielsweise zeigt die WO 2016/110 327 A1 diese Vorgehensweise. Der Verdrängungsmechanismus beruht darauf, dass hinreichend große Datenpakete geteilt werden können. Wenn ein derart niederpriores Datenpaket von einem Knotenpunkt bereits empfangen wird, während ein hochpriores Datenpaket eintrifft, kann das niederpriore Datenpaket an vorbestimmten Stellen - typischerweise bei ganzzahligen Vielfachen von 64 Byte - getrennt werden. Es muss daher lediglich abgewartet werden, bis beim Weiterleiten des niederprioren Datenpakets eine derartige Trennstelle erreicht ist. Dann kann die Übermittlung des niederprioren Datenpakets unterbrochen werden, das hochpriore Datenpaket weitergeleitet werden und danach die Übermittlung des niederprioren Datenpakets fortgesetzt werden. Diese Vorgehensweise führt zu einer Reduzierung der Variation der Latenzzeit, weil die hochprioren Datenpakete zwischen die Teile der niederprioren Datenpakete eingestreut werden können. Eine gewisse Menge an Jitter verbleibt jedoch. Weiterhin verbleibt die Möglichkeit, das hochpriore Datenpakete sich gegenseitig blockieren. Dieses Problem kann gemäß der vorgenannten Methode gelöst werden. Auch in diesem Fall verbleibt jedoch noch ein gewisser Jitter.

In beiden Fällen muss die Planung der Kommunikationen die realen Latenzzeiten und alle möglichen Interferenzen berücksichtigen. Auch müssen alle möglichen Quellen von Jitter berücksichtigt werden. Um derart komplexe Probleme zu behandeln, wird oftmals ein gemeinsames Modell verwendet, mittels dessen sowohl Konflikte mit niederprioren Datenpaketen als auch Konflikte mit hochprioren Datenpaketen gelöst werden sollen. Im Rahmen des Modells werden die Sendezeiten zwischen der minimalen und der maximalen Latenzzeit ermittelt und exklusiv für jeweils ein bestimmtes Datenpaket reserviert. Diese Vorgehensweise führt zu einer Reduzierung der nutzbaren Menge an Daten, die übertragen werden kann. Die Reduzierung ist umso größer, je höher die Datenübertragungsrate als solche ist.

Aus der EP 3 038 325 A1 ist ein Betriebsverfahren der eingangs genannten Art bekannt, bei dem die Knotenpunkte während eines ersten Teilbereichs eines Zeitfensters Datenpakete entgegennehmen und die entgegengenommenen Datenpakete bis zum Beginn eines zweiten Teilbereichs des Zeitfensters puffern, wobei der zweite Teilbereich im wesentlichen komplementär zum ersten Teilbereich ist. Zu Beginn des jeweiligen zweiten Teilbereichs leiten die Knotenpunkte die gepufferten Datenpakete an den jeweils nächsten Knotenpunkt weiter. Durch diese Vorgehensweise wird vermieden, dass sich individuelle Latenzzeiten akkumulieren. Jitter kann aber nicht vermieden werden. Es ist weiterhin erforderlich, dass die Knotenpunkte untereinander synchronisiert sind. Eine ähnliche Vorgehensweise ist in der internationalen Norm IEEE 802.1 Qch erläutert.

Die Aufgabe der vorliegenden Erfindung besteht darin, Möglichkeiten zu schaffen, mittels derer für geschützte Datenpakete auf einfache Weise eine hohe effektive Datenrate gewährleistet werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 4.

Erfindungsgemäß wird ein Betriebsverfahren der eingangs genannten Art dadurch ausgestaltet, dass bei geschützten Datenpaketen eine jeweilige Zeitdifferenz zwischen dem Sendezeitpunkt des jeweiligen Knotenpunkts und dem Sendezeitpunkt des vorhergehenden Knotenpunkts bzw. im Falle des an die jeweilige Datenquelle angrenzenden jeweiligen Knotenpunkts des Sendezeitpunkts der jeweiligen Datenquelle einen jeweiligen vorbestimmten Wert aufweist.

Dadurch wird erreicht, dass die geschützten Datenpakete von den Knotenpunkten jeweils mit einem definierten Zeitversatz gegenüber dem von der Datenquelle bzw. dem jeweils vorhergehenden Knotenpunkt ausgehenden Übermitteln weiter übermittelt werden. Dadurch kann für jeden Knotenpunkt der Jitter auf 0 bzw. auf nahezu 0 reduziert werden. Es ist somit für jeden Knotenpunkt bekannt, wann dieser das jeweilige geschützte Datenpaket weiterleitet. Da sich die Länge des Datenpakets und damit dessen Zeitdauer nicht ändert, ist es auch nicht erforderlich, mit jedem weiteren Knotenpunkt, über den das geschützte Datenpaket geführt wird, die Zeitdauer um den maximal möglichen Jitter zu erhöhen. Im Ergebnis kann dadurch die nutzbare Menge an Daten, die pro Zeiteinheit übertragen werden kann, maximiert werden.

In einer bevorzugten Ausgestaltung ist der jeweilige vorbestimmte Wert für die Knotenpunkte derselbe. In diesem Fall erfolgt quasi ein getaktetes Weitergeben der geschützten Datenpakete von einem Knotenpunkt zum nächsten Knotenpunkt. Insbesondere kann dadurch vermieden werden, dass die geschützten Datenpakete das Datenübertragungsnetz mit verschiedenen Geschwindigkeiten durchlaufen. Es kann also vermieden werden, dass ein geschütztes Datenpaket ein anderes geschütztes Datenpaket einholt. Zeitkonflikte können dadurch vermieden werden.

Um das erfindungsgemäße Betriebsverfahren ausführen zu können, ist es insbesondere nicht erforderlich, dass die Knotenpunkte untereinander synchronisiert sind. Denn alles, was ein Knotenpunkt "wissen" muss, um ein an ihn übermitteltes geschütztes Datenpaket zum richtigen Zeitpunkt weiterleiten zu können, sind der (auf den jeweiligen Knotenpunkt bezogene) lokale Zeitpunkt, zu dem das geschützte Datenpaket bei dem jeweiligen Knotenpunkt eintrifft, und die (ebenfalls auf den jeweiligen Knotenpunkt bezogene) lokale Zeitdifferenz, nach der das geschützte Datenpaket an den nächsten Knotenpunkt bzw. an die jeweilige Datensenke weitergeleitet werden soll. Hierfür ist es nicht erforderlich, dass die interne Uhr des jeweiligen Knotenpunkts mit den internen Uhren anderer Knotenpunkte oder der Datensenken oder der Datenquellen synchronisiert ist. Die Uhr muss nur "gehen".

Um Datenkonflikte zu vermeiden, sollten die Datenquellen die geschützten Datenpakete jedoch zu bestimmten Zeitpunkten an den an die jeweilige Datenquelle angrenzenden Knotenpunkt übermitteln. Es sollte also der jeweilige Sendezeitpunkt für die Datenquellen in einem für die jeweilige Datenquelle vorbestimmten jeweiligen Teilintervall einer Periode liegen. Insbesondere kann der jeweilige Sendezeitpunkt zu Beginn des jeweiligen Teilintervalls liegen. Um zu gewährleisten, dass ein derartiger Sachverhalt über längere Zeit aufrechterhalten bleibt, sollten die Datenquellen untereinander synchronisiert sein.

Die Aufgabe wird weiterhin durch ein Datenübertragungsnetz mit den Merkmalen des Anspruchs 5 gelöst. Erfindungsgemäß ist ein Datenübertragungsnetz der eingangs genannten Art dadurch ausgestaltet, dass die Datenquellen und die Knotenpunkte derart parametriert sind, dass sie im Betrieb gemäß einem erfindungsgemäßen Betriebsverfahren miteinander zusammenwirken.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1     ein Datenübertragungsnetz,
FIG 2     ein Zeitdiagramm,
FIG 3     ein Ablaufdiagramm,
FIG 4     ein Steuerungssystem und einen industriellen technischen Prozess und
FIG 5     ein Zeitdiagramm.

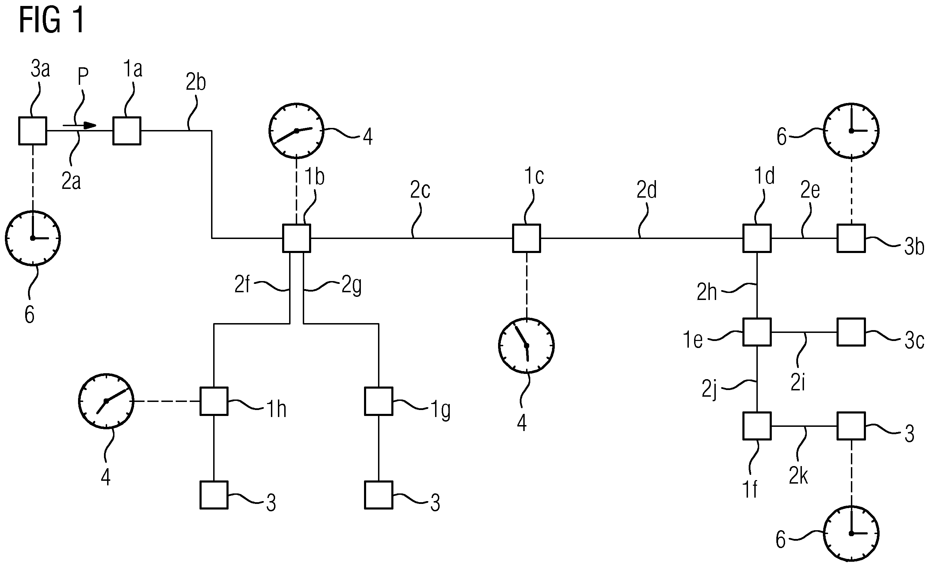

Gemäß FIG 1 weist ein Datenübertragungsnetz eine Anzahl von Knotenpunkten 1 auf. Die Knotenpunkte 1 des Datenübertragungsnetzes sind über Verbindungsleitungen 2 miteinander verbunden, so dass jedes Paar von Knotenpunkten 1 entweder über eine einzelne Verbindungsleitung 2 direkt miteinander verbunden ist oder über mindestens zwei Verbindungsleitungen 2 und mindestens einen anderen Knotenpunkt 1 indirekt miteinander verbunden ist. Die Knotenpunkte 1 sind in FIG 1 mit einem kleinen Buchstaben (a bis h) ergänzt, um sie nachstehend bei Bedarf voneinander unterscheiden zu können. Gleiches gilt für die Verbindungsleitungen 2. Auch die Verbindungsleitungen 2 sind durch einen kleinen Buchstaben (a bis k) ergänzt, um sie nachstehend bei Bedarf voneinander unterscheiden zu können.

Die Knotenpunkte 1 dienen der Weiterleitung von Datenpaketen P, die von Geräten 3 in das Datenübertragungsnetz eingespeist werden, an andere Geräte 3. Die Geräte 3 sind somit über die Knotenpunkte 1 miteinander verbunden. Auch die Geräte 3 sind durch einen kleinen Buchstaben (a bis f) ergänzt, um sie nachstehend bei Bedarf voneinander unterscheiden zu können.

In Einzelfällen befindet sich zwischen zwei Geräten 3 nur ein einziger Knotenpunkt 1. In der Regel - siehe in FIG 1 rein beispielhaft die Verbindung zwischen den Geräten 3a und 3b - befindet sich zwischen zwei Geräten 3 jedoch eine Mehrzahl von Knotenpunkten 1.

Die Topologie des Datenübertragungsnetzes ist von untergeordneter Bedeutung. Die in FIG 1 dargestellte Topologie ist somit rein beispielhaft. Es ist möglich, dass von einigen der Knotenpunkte 1 nur exakt zwei Verbindungsleitungen 2 abgehen, siehe in FIG 1 beispielsweise die Knotenpunkte 1c und 1f. In vielen Fällen wird von dem jeweiligen Knotenpunkt 1 jedoch eine größere Anzahl von Verbindungsleitungen 2 abgehen, siehe in FIG 1 beispielsweise die Knotenpunkte 1b, 1d und 1e. Ein Beispiel eines derartigen Datenübertragungsnetzes ist ein Ethernet.

Es ist möglich, dass einige der Geräte 3 ausschließlich Datenpakete P in das Datenübertragungsnetz einspeisen. In diesem Fall handelte es sich bei dem jeweiligen Gerät 3 um eine reine Datenquelle. Ebenso ist möglich, dass einige der Geräte 3 ausschließlich Datenpakete P aus dem Datenübertragungsnetz entgegennehmen. In diesem Fall handelt es sich bei dem jeweiligen Gerät 3 um eine reine Datensenke. Oftmals handelt es sich bei den Geräten 3 jedoch um Einheiten, die sowohl Datenpakete P in das Datenübertragungsnetz einspeisen als auch (selbstverständlich andere) Datenpakete P aus dem Datenübertragungsnetz entgegennehmen. In diesem Fall stellt das jeweilige Gerät 3 für die von ihm in das Datenübertragungsnetz eingespeisten Datenpakete P eine Datenquelle dar, für die von ihm aus dem Datenübertragungsnetz entgegengenommenen Datenpakete P eine Datensenke. Die Anzahl an Datenquellen und Datensenken kann nach Bedarf sein. In der Regel ist sie jeweils erheblich größer als 1.

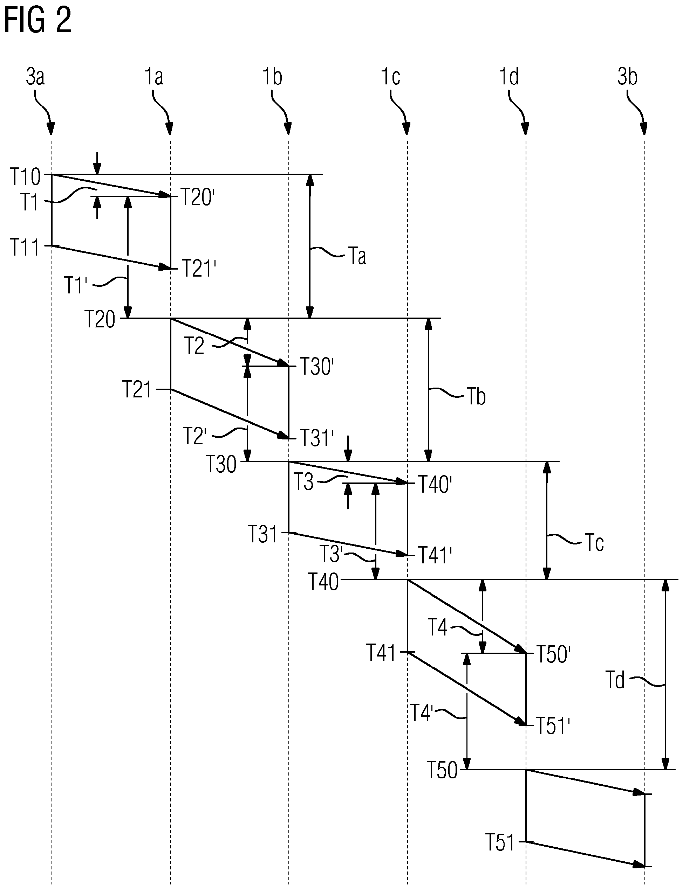

Nachfolgend wird in Verbindung mit den FIG 1 und 2 rein beispielhaft die Übertragung eines Datenpakets P von dem Gerät 3a zu dem Gerät 3b erläutert. Die nachstehend in Verbindung mit FIG 2 getroffenen Aussagen sind jedoch von der Systematik her gesehen für jede Übertragung eines Datenpakets P gültig. Weiterhin wird nachstehend das Gerät 3a als Datenquelle bezeichnet. In analoger Weise wird nachstehend das Gerät 3b als Datensenke bezeichnet. Dies soll jedoch nicht bedeuten, dass diese beiden Geräte 3a, 3b ausschließlich als Datenquelle bzw. Datensenke fungieren. Die entsprechende Aussage bezieht sich nur auf die nachstehend in Verbindung mit den FIG 1 und 2 erläuterte einzelne Übermittlung eines Datenpakets P.

Das Übertragen des Datenpakets P von der Datenquelle 3a zur Datensenke 3b geschieht wie folgt:

Die Datenquelle 3a übermittelt das Datenpaket P über die Verbindungsleitung 2a an den Knotenpunkt 1a. Die Datenquelle 3a beginnt die Übermittlung des Datenpakets P zu einem Sendezeitpunkt T10. Die Übermittlung des Datenpakets P ist zu einem Beendigungszeitpunkt T11 abgeschlossen. Die genannten Zeitpunkte T10, T11 beziehen sich auf die Datenquelle 3a. Es kommt also nicht darauf an, wann die Daten des Datenpakets P beim Knotenpunkt 1a ankommen. Vielmehr kommt es darauf an, wann die Daten des Datenpakets P von der Datenquelle 3a in die Verbindungsleitung 2a eingespeist werden.

Der Knotenpunkt 1a nimmt das Datenpaket P entgegen. Die Entgegennahme des Datenpakets P beginnt zu einem Empfangszeitpunkt T20' und endet zu einem Zeitpunkt T21'. Der Empfangszeitpunkt T20' liegt geringfügig später als der Sendezeitpunkt T10. Die genannten Zeitpunkte T20', T21' beziehen sich auf den Knotenpunkt 1a. Im Gegensatz zu den Zeitpunkten T10, T11 kommt es nunmehr also darauf an, wann die Daten des Datenpakets P beim Knotenpunkt 1a ankommen. Die Differenz zwischen dem Empfangszeitpunkt T20' und dem Sendezeitpunkt T10 ist die Laufzeit T1, die für die Übertragung der Daten des Datenpakets P über die Verbindungsleitung 2a benötigt wird.

Die Laufzeit T1 kann beispielsweise vorab mittels einer Messung ermittelt werden. Derartige Vorgehensweisen sind bekannt, siehe beispielsweise die internationalen Normen IEEE 1588 oder IEEE 802.1 AS.

Die Differenz zwischen den Zeitpunkten T20' und T21' ist dieselbe wie die Differenz zwischen den Zeitpunkten T10 und T11. Die Zeitdauer, die für das Einspeisen des Datenpakets P in das Datenübertragungsnetz benötigt wird, bleibt also unverändert.

Der Knotenpunkt 1a leitet das Datenpaket P über die Verbindungsleitung 2b an den Knotenpunkt 1b weiter. Der Knotenpunkt 1a beginnt die Übermittlung des Datenpakets P zu einem Sendezeitpunkt T20. Die Übermittlung des Datenpakets P ist zu einem Beendigungszeitpunkt T21 abgeschlossen. Die genannten Zeitpunkte T20, T21 beziehen sich auf den Knotenpunkt 1a. Es kommt also nicht darauf an, wann die Daten des Datenpakets P beim Knotenpunkt 1b ankommen, sondern darauf, wann die Daten des Datenpakets P von dem Knotenpunkt 1a in die Verbindungsleitung 2b eingespeist werden.

Der Knotenpunkt 1b nimmt das Datenpaket P entgegen. Die Entgegennahme des Datenpakets P beginnt zu einem Empfangszeitpunkt T30' und endet zu einem Zeitpunkt T31'. Der Empfangszeitpunkt T30 liegt geringfügig später als der Sendezeitpunkt T20. Die genannten Zeitpunkte T30', T31' beziehen sich auf den Knotenpunkt 1b. Im Gegensatz zu den Zeitpunkten T20, T21 kommt es nunmehr also darauf an, wann die Daten des Datenpakets P beim Knotenpunkt 1b ankommen. Die Differenz zwischen dem Empfangszeitpunkt T30' und dem Sendezeitpunkt T20 ist die Laufzeit T2, die für die Übertragung der Daten des Datenpakets P über die Verbindungsleitung 2b benötigt wird. Die Differenz zwischen den Zeitpunkten T30' und T31' ist dieselbe wie die Differenz zwischen den Zeitpunkten T10 und T11.

Der Knotenpunkt 1b leitet das Datenpaket P über die Verbindungsleitung 2c an den Knotenpunkt 1c weiter. Der Knotenpunkt 1b beginnt die Übermittlung des Datenpakets P zu einem Sendezeitpunkt T30. Die Übermittlung des Datenpakets P ist zu einem Beendigungszeitpunkt T31 abgeschlossen. Die genannten Zeitpunkte T30, T31 beziehen sich auf den Knotenpunkt 1b. Es kommt also nicht darauf an, wann die Daten des Datenpakets P beim Knotenpunkt 1c ankommen, sondern darauf, wann die Daten des Datenpakets P von dem Knotenpunkt 1b in die Verbindungsleitung 2c eingespeist werden.

Dieser Vorgang wiederholt sich für die Knotenpunkte 1c und 1d. Hierdurch ergeben sich die in FIG 2 eingezeichneten zugehörigen Zeitpunkte T40', T41', T40 und T41 für den Knotenpunkt 1c bzw. T50', T51', T50 und T51 für den Knotenpunkt 1d und die Laufzeiten T3, T4 für die Verbindungsleitungen 2c, 2d.

Bei dem Datenpaket P kann es sich um ein ungeschütztes Datenpaket handeln. In diesem Fall bestimmen die Knotenpunkte 1a bis 1d interne Verzögerungszeiten T1' bis T4' und hiermit korrespondierend die Sendezeitpunkte T20 bis T50 nach Bedarf. Alternativ kann es sich bei dem Datenpaket P um ein geschütztes Datenpaket handeln. Das Datenpaket P kann in diesem Fall beispielsweise dadurch geschützt sein, dass ihm eine entsprechend hohe Priorität zugeordnet ist. Alternativ oder zusätzlich kann das Datenpaket P beispielsweise dadurch geschützt sein, dass es als Bestandteil einer geschützten Verbindung übermittelt wird. Die geschützte Verbindung kann beispielsweise ein Stream sein, wie er beispielsweise von der AVB ( = Audio/Video Bridging) Task Group und insbesondere von der TSN (= Time-Sensitive Networking) Task Group in der internationalen Norm IEEE 802.1 festgelegt ist.

Handelt es sich bei dem Datenpaket P um ein geschütztes Datenpaket, sind die Knotenpunkte 1a bis 1d derart parametriert, dass die Verzögerungszeiten T1' bis T4' vorbestimmte Werte aufweisen. Die Differenz zwischen dem jeweiligen Empfangszeitpunkt und dem korrespondierenden Sendezeitpunkt eines Knotenpunkts 1a bis 1d - also beispielsweise die Differenz zwischen dem Empfangszeitpunkt T20' und dem Sendezeitpunkt T20 des Knotenpunkts 1a - weist somit einen vorbestimmten Wert auf, nämlich die entsprechende Verzögerungszeit, für den Knotenpunkt 1a also die Verzögerungszeit T1'. Die Laufzeiten T1 bis T4 sind wiederum feste Werte, die sich im Laufe der Zeit nicht ändern. Damit weist auch die Summe der entsprechenden Laufzeit T1 bis T4 von der Datenquelle 3a bzw. vom vorgeordneten Knotenpunkt 1a bis 1c und der jeweiligen Verzögerungszeit T1' bis T4' des jeweiligen Knotenpunkts 1a bis 1d einen jeweiligen vorbestimmten Wert auf, nachfolgend als Knotenlaufzeit Ta bis Td bezeichnet. Die Knotenlaufzeiten Ta bis Td sind somit zwar länger als minimal möglich, dafür sind sie aber für jedes geschützte Datenpaket P einheitlich und damit frei von Jitter. Dies stellt das Grundprinzip der vorliegenden Erfindung dar, nämlich die Weiterleitung von geschützten Datenpaketen P mit vorbestimmten Knotenlaufzeiten Ta bis Td.

Die jeweilige Knotenlaufzeit Ta bis Td kann nach Bedarf bestimmt sein. Entscheidend ist, dass sie groß genug ist, um sowohl die jeweilige Laufzeit T1 bis T4 abzudecken als auch die möglichen Ursachen von Verzögerungen innerhalb des jeweiligen Knotenpunkts 1a bis 1d. Mögliche Ursachen für Verzögerungen sind beispielsweise die Handhabung von Daten auf der physikalischen Ebene des jeweiligen Knotenpunkts 1a bis 1d beim Empfang und beim Wiederaussenden des Datenpakets P und die unvermeidlichen Verzögerungen innerhalb des jeweiligen Knotenpunkts 1a bis 1d bei der Weiterleitung von der Empfangsqueue eines Knotenpunkts 1a bis 1d zur entsprechenden Sendequeue. Eine weitere mögliche Ursache ist die Wartezeit, die abgewartet muss, um bei einem anderen Datenpaket P, das von dem jeweiligen Knotenpunkt 1a bis 1d bereits gesendet wird, den Sendevorgang zu beenden oder eine Stelle des anderen Datenpakets P zu erreichen, an dem dieses andere Datenpaket P unterbrochen werden kann. Vorgehensweisen zur Unterbrechung von Datenpaketen sind Fachleuten bekannt. Rein beispielhaft kann auf die WO 2016/110 327 A1 verwiesen werden. Vorzugsweise wird die jeweilige Knotenlaufzeit Ta bis Td so klein wie möglich gewählt, um die Gesamtlaufzeit, die das geschützte Datenpaket P von der Datenquelle 3a bis zur Datensenke 3b benötigt, möglichst gering zu halten.

Falls die Laufzeiten T1 bis T4 gegenüber den Verzögerungszeiten T1' bis T4' hinreichend klein sind und weiterhin die Anzahl der an der Übertragung der Datenpakete P jeweils beteiligten Knotenpunkte 1 hinreichend klein ist, so dass auch die Summe der Laufzeiten T1 bis T4 gegenüber jeder der Verzögerungszeiten T1' bis T4' klein ist, können unter Umständen die Laufzeiten T1 bis T4 vernachlässigt werden. Besser ist es jedoch, sie zu berücksichtigen.

Obenstehend wurde die Übermittlung eines einzelnen Datenpakets P von der Datenquelle 3a zur Datensenke 3b erläutert. Verzweigungen wurden hierbei nicht betrachtet. Es wurde also nicht der Fall betrachtet, dass ein bestimmter Knotenpunkt 1 über mehrere verschiedene Verbindungsleitungen 2 ein geschütztes Datenpaket P entgegennehmen kann. Die entsprechenden Aussagen sind aber auch gültig, wenn ein Knotenpunkt 1 Verzweigungen aufweist. Dies wird nachstehend rein beispielhaft anhand des Knotenpunktes 1e näher erläutert. Die entsprechenden Erläuterungen sind in analoger Weise auch für andere Knotenpunkte 1 gültig.

Der Knotenpunkt 1e ist entsprechend der rein beispielhaften Darstellung von FIG 1 mit zwei anderen Knotenpunkten 1 verbunden, nämlich über die Verbindungsleitungen 2h und 2j mit den Knotenpunkten 1d und 1f, und weiterhin über die Verbindungsleitung 2i mit dem Gerät 3c verbunden. Wenn die Laufzeit von Daten eines Datenpakets P vom Knotenpunkt 1d zum Knotenpunkt 1e mit T5 bezeichnet wird, die Laufzeit von Daten eines Datenpakets P vom Knotenpunkt 1f zum Knotenpunkt 1e mit T6 und die Laufzeit von Daten eines Datenpakets P vom Gerät 3c zum Knotenpunkt 1e mit T7, sollten die zugehörigen Verzögerungszeiten T5', T6' und T7' derart gewählt sein, dass die Beziehung

$$T5 + T5' = T6 + T6' = T7 + T7' = Te$$

gilt. Te ist somit die entsprechende Knotenlaufzeit, die zwischen einer Übermittlung von Daten zum Knotenpunkt 1e und der Weiterleitung der Daten durch den Knotenpunkt 1e auftritt. Sie ist unabhängig davon, von welchem anderen Knotenpunkt 1 - hier den Knotenpunkten 1d, 1f - oder von welchem Gerät 3 - hier dem Gerät 3c - aus die Daten an den Knotenpunkt 1e übermittelt werden. In analoger Weise sind auch die Knotenlaufzeiten für die anderen Knotenpunkte 1 bestimmt, beispielsweise die Knotenlaufzeiten Ta bis Td.

Prinzipiell ist es möglich, die jeweilige Knotenlaufzeit Ta bis Te individuell zu bestimmen. Vorzugsweise weisen die Knotenlaufzeiten - dies gilt nicht nur für die obenstehend explizit erläuterten Knotenlaufzeiten Ta bis Te, sondern für alle Knotenlaufzeiten - alle denselben Wert auf. Vorzugsweise gilt also die Beziehung

$$Ta = Tb = Tc = Td = Te = .... = T$$

, wobei T die für alle Knotenpunkte 1 einheitliche Knotenlaufzeit ist. Diese Vorgehensweise, also die Festlegung einer einheitlichen Knotenlaufzeit T für alle Knotenpunkte 1, vereinfacht die Kommunikationsplanung, da ein einmal gegebener Zeitbezug von Datenpaketen P während der Übertragung über das Datenübertragungsnetz bei jeder Weitergabe von einem Knotenpunkt 1 an den nächsten Knotenpunkt 1 erhalten bleibt.

Es ist möglich, dass die Knotenpunkte 1 untereinander synchronisiert sind. Im Rahmen der vorliegenden Erfindung ist dies jedoch nicht erforderlich. Es ist lediglich erforderlich, dass jeder Knotenpunkt 1 intern eine Uhr 4 aufweist, so dass der jeweilige Knotenpunkt 1 jeweils feststellen kann, zu welchem Zeitpunkt ein Datenpaket P bei ihm eintrifft. Denn entscheidend ist aus Sicht des jeweiligen Knotenpunkts 1 nicht, zu welchem absoluten Zeitpunkt der jeweilige Knotenpunkt 1 ein an ihn übermitteltes Datenpaket P weiterleitet.

Entscheidend ist, dass der Knotenpunkt 1 das Datenpaket P um die jeweilige Verzögerungszeit T1' bis T4' verzögert. Hierfür kommt es nur auf relative Zeiten innerhalb des jeweiligen Knotenpunkts 1 an, nicht aber auf deren Synchronisierung mit einer globalen Zeit. Der Umstand, dass die Knotenpunkte 1 untereinander nicht synchronisiert sind, ist in FIG 1 dadurch angedeutet, dass zwar bei einigen der Knotenpunkte 1 eine Uhr 4 mit dargestellt ist, die Uhren 4 jedoch unterschiedliche Zeiten anzeigen. Falls dennoch eine Synchronisierung der Knotenpunkte 1 untereinander erfolgt, kann eine noch weitere Optimierung bezüglich der exakten Einhaltung der Knotenlaufzeiten Ta bis Te, T gewährleistet werden. Der Gewinn an Genauigkeit ist in aller Regel aber sehr gering.

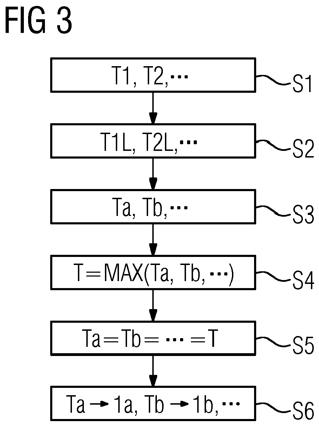

Die Verzögerungszeiten T1' bis T4' müssen den Knotenpunkten 1 durch entsprechende Parametrierung vorgegeben werden. Dies ist jedoch ohne weiteres im Rahmen der Inbetriebnahme des Datenübertragungsnetzes möglich. Beispielsweise können entsprechend der Darstellung in FIG 3 im Rahmen der Inbetriebnahme des Datenübertragungsnetzes zunächst in einem Schritt S1 für die Knotenpunkte 1 die Laufzeiten T1, T2 usw. ermittelt werden und sodann in einem Schritt S2 für die Knotenpunkte 1 eine maximale Latenzzeit T1L, T2L usw. ermittelt werden. Die jeweilige maximale Latenzzeit T1L, T2L usw. ist diejenige Zeit, die von dem jeweiligen Knotenpunkt 1 maximal "hingenommen" werden muss, bevor er ein entgegengenommenes geschütztes Datenpaket P weiterleiten kann. Die Summe der jeweiligen Laufzeit T1, T2 usw. und der jeweiligen maximalen Latenzzeit T1L, T2L usw. kann sodann in einem Schritt S3 als jeweilige Knotenlaufzeit Ta, Tb usw. definiert werden. Gegebenenfalls können zusätzlich Schritte S4 und S5 vorhanden sein. Im Schritt S4 wird das Maximum der im Schritt S3 ermittelten Knotenlaufzeiten Ta, Tb usw. ermittelt. Dieses Maximum entspricht dann der für alle Knotenpunkte 1 einheitlichen Knotenlaufzeit T. Sie wird im Schritt S5 den einzelnen Knotenlaufzeiten Ta, Tb usw. zugeordnet. Der Schritt S5 führt also zu einer Neudefinition der bereits im Schritt S3 einmal ermittelten Knotenlaufzeiten Ta, Tb usw.

Unabhängig davon, ob die Schritte S4 und S5 vorhanden sind, werden die Knotenpunkte 1 in einem Schritt S6 gemäß den ermittelten Knotenlaufzeiten Ta, Tb usw. parametriert.

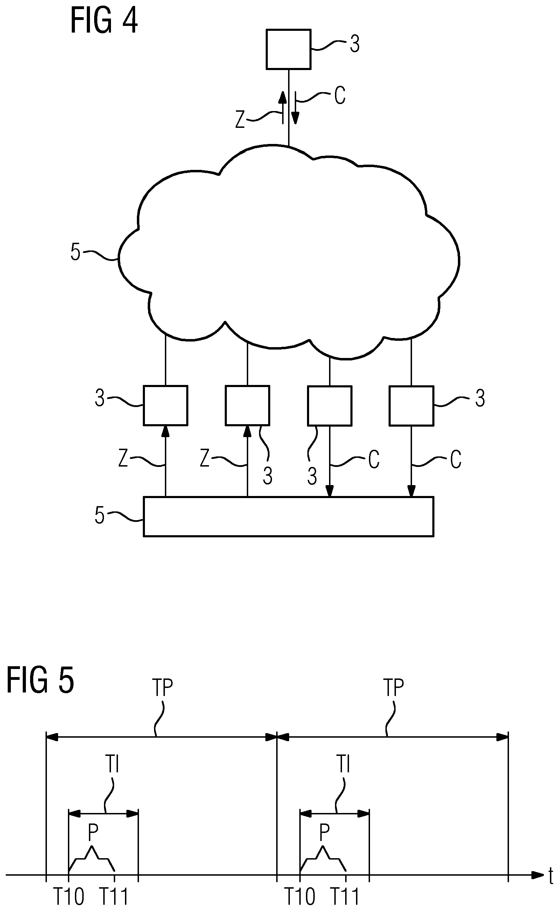

Die erfindungsgemäße Vorgehensweise wird vorzugsweise insbesondere bei einem verteilten Steuerungssystem eingesetzt. Bei einem verteilten Steuerungssystems ist entsprechend der Darstellung in FIG 4 mindestens eines (in der Regel exakt eines) der Geräte 3 eine Zentraleinheit des Steuerungssystems. Mindestens eines (in der Regel mehrere) der Geräte 3 implementiert die Funktionalität eines Sensors und übermittelt die von ihm erfassten Zustände Z eines industriellen technischen Prozesses 5 (beispielsweise einer Bearbeitungsmaschine) an die Zentraleinheit. Die Zentraleinheit ermittelt anhand der Zustände Z und interner Zustände der Zentraleinheit (beispielsweise den Werten von Timern und Merkern) Steuersignale C für mindestens eines (in der Regel mehrere) der Geräte 3, welche die Funktionalität eines Aktors implementieren, und übermittelt die Steuersignale C an diese Geräte 3. Die Übermittlung erfolgt über das Datenübertragungsnetz, das in FIG 4 durch eine Wolke angedeutet ist.

Es ist möglich, dass manche Geräte 3 ausschließlich als Sensoren wirken. Ebenso ist es möglich, dass andere Geräte 3 ausschließlich als Aktoren wirken. Es ist jedoch ebenso möglich, dass einige oder alle Geräte 3 beide Funktionalitäten implementieren. Insbesondere wenn geschützte Datenpakete P zwischen derartigen Geräten 3 übermittelt werden, sollte den entsprechenden Datenpaketen P eine möglichst hohe Priorität zugeordnet sein. Falls die Übermittlung im Rahmen einer geschützten Verbindung erfolgt, müssen im Rahmen der geschützten Verbindung die entsprechende Bandbreite und die internen Ressourcen der Knotenpunkte 1 in hinreichendem Umfang für diese Verbindung reserviert sein und vorgehalten werden.

Im Falle eines verteilten Steuerungssystems erfolgt sowohl eine zyklisch getaktete Übermittlung der Zustände Z von den als Sensor wirkenden Geräten 3 an die Zentraleinheit als auch eine zyklisch getaktete Übermittlung der Steuersignale C von der Zentraleinheit an die als Aktor wirkenden Geräte 3. Die Datenübermittlungen erfolgen im Rahmen von geschützten Datenpaketen P, so wie obenstehend erläutert. Insbesondere in einem derartigen Fall, prinzipiell aber auch bei anderen Sachverhalten, ist entsprechend der Darstellung von FIG 5 für jede Datenquelle - beispielsweise die Datenquelle 3a - innerhalb einer Periode TP ein jeweiliges Teilintervall TI bestimmt. Die jeweilige Datenquelle - beispielsweise die Datenquelle 3a - übermittelt ihre Datenpakete P derart, dass ihr Sendezeitpunkt T10 und auch ihr Beendigungszeitpunkt T11 innerhalb des jeweiligen Teilintervalls TI liegt. Das jeweilige Teilintervall TI kann individuell für die jeweilige Datenquelle - beispielsweise die Datenquelle 3a - bestimmt sein. Der jeweilige Sendezeitpunkt T10 der entsprechenden Datenquelle 3a kann entsprechend der Darstellung in FIG 5 insbesondere mit dem Beginn des jeweiligen Teilintervalls TI übereinstimmen.

Um bei einem derartigen Sachverhalt eine ordnungsgemäße Übermittlung der geschützten Datenpakete P zu gewährleisten, sollten die Datenquellen 3a - vorzugsweise alle Geräte 3 - untereinander synchronisiert sein. Dies ist in FIG 1 dadurch angedeutet, dass bei einigen der Geräte 3 eine Uhr 6 mit dargestellt ist und dass die Uhren 6 die gleiche Zeit anzeigen. Die Synchronisation als solche ist jedoch nicht Gegenstand der vorliegenden Erfindung. Möglichkeiten zur Synchronisierung sind Fachleuten auch allgemein bekannt. Sie müssen an dieser Stelle daher nicht detailliert erläutert werden. Ein etwaiger Synchronisationsfehler kann zu einem - äußerst geringfügigen - Jitter bezüglich der Übermittlung eines geschützten Datenpakets von der jeweiligen Datenquelle 3 an den angrenzenden Knotenpunkt 1 führen. Dieser Jitter ist jedoch vernachlässigbar. Vor allem aber bleibt der Jitter bei der weiteren Übertragung zur entsprechenden Datensenke 3 konstant. Er wird nicht von Knotenpunkt 1 zu Knotenpunkt 1 immer größer.

Zusammengefasst betrifft die vorliegende Erfindung somit folgenden Sachverhalt:

Ein Datenübertragungsnetz weist Datenquellen 3a und Datensenken 3b auf, die über Knotenpunkte 1a bis 1d miteinander verbunden sind. Zum Übertragen eines Datenpakets P von einer Datenquelle 3a zu einer Datensenke 3b übermittelt die Datenquelle 3a das Datenpaket P an einen angrenzenden Knotenpunkt 1a. Der Knotenpunkt 1a nimmt das Datenpaket P entgegen und leitet es an einen anderen Knotenpunkt 1b weiter, bis ein an die Datensenke 3b angrenzender Knotenpunkt 1d das Datenpaket P an die Datensenke 3b übermittelt. Die Datenquelle 3a und die das Datenpaket P entgegennehmenden Knotenpunkte 1a bis 1d leiten das Datenpaket P zu einem jeweiligen Sendezeitpunkt T10 bis T50 an den jeweils nächsten Knotenpunkt 1a bzw. an die Datensenke 3b weiter. Zumindest ein Teil der Datenpakete P sind geschützte Datenpakete. Bei ihnen weist eine jeweilige Zeitdifferenz Ta bis Td zwischen dem Sendezeitpunkt T20 bis T50 des jeweiligen Knotenpunkts 1a bis 1d und dem Sendezeitpunkt T20 bis T40 des vorhergehenden Knotenpunkts 1a bis 1c bzw. der Datenquelle 3a einen jeweiligen vorbestimmten Wert auf.

Die vorliegende Erfindung weist viele Vorteile auf. Insbesondere treten bei der Übertragung von geschützten Datenpaketen P keine Abhängigkeiten der Übertragungszeit von der Hardware der Knotenpunkte 1 und den Längen der Verbindungsleitungen 2 mehr auf. Insbesondere die Länge der Verbindungsleitungen 2 und hiermit die Dauer der Laufzeiten T1, T2 usw. wird vom dem jeweiligen Knotenpunkt 1 berücksichtigt, der das geschützte Datenpaket P entgegen nimmt. Dies vereinfacht die Planung und Optimierung der Datenkommunikation. Die Datenübertragung wird robust. Es tritt für geschützte Datenpakete P keine Variation der Übertragungszeit mehr auf. Die bisher für die Berücksichtigung von Jitter benötigte Bandbreite wird daher für die Kommunikation von Nutzdaten freigesetzt. Aufgrund des Umstands, dass eine Synchronisierung der Knotenpunkte 1 nicht erforderlich ist, wird für die Synchronisierung der Knotenpunkte 1 keine Kommunikation nötig. Auch hierdurch wird Bandbreite für die Übertragung von Nutzdaten frei. Auch ist für die Berücksichtigung von Synchronisierungsfehlern keine Bandbreite mehr nötig. Weiterhin können dem Datenübertragungsnetz zusätzliche Geräte 3 und neue Verbindungsleitungen 2 und auch neue Knotenpunkte 1 hinzugefügt werden, ohne das bestehende Datenübertragungsnetz neu konfigurieren zu müssen. Die nutzbare Bandbreite wird optimiert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Betriebsverfahren für ein Datenübertragungsnetz, das eine Anzahl von Datenquellen (3a) und eine Anzahl von Datensenken (3b) aufweist, die über eine Mehrzahl von Knotenpunkten (1a bis 1d) des Datenübertragungsnetzes miteinander verbunden sind,

- wobei zum Übertragen eines jeweiligen Datenpakets (P) von der jeweiligen Datenquelle (3a) zur jeweiligen Datensenke (3b)

-- die jeweilige Datenquelle (3a) das jeweilige Datenpaket (P) über eine Verbindungsleitung (2a) an einen an die jeweilige Datenquelle (3a) angrenzenden jeweiligen Knotenpunkt (1a) des Datenübertragungsnetzes übermittelt,
-- der an die jeweilige Datenquelle (3a) angrenzende jeweilige Knotenpunkt (1a) das Datenpaket (P) entgegennimmt und an einen anderen Knotenpunkt (1b) weiterleitet usw.,
-- bis ein an die jeweilige Datensenke (3b) angrenzender jeweiliger Knotenpunkt (1d) das jeweilige Datenpaket (P) an die jeweilige Datensenke (3b) übermittelt,

- wobei die jeweilige Datenquelle (3a) und die das jeweilige Datenpaket (P) entgegennehmenden Knotenpunkte (1a bis 1d) das jeweilige Datenpaket (P) zu einem jeweiligen Sendezeitpunkt (T10 bis T50) an den an die jeweilige Datenquelle (3a) angrenzenden jeweiligen Knotenpunkt (1a), an den jeweiligen anderen Knotenpunkt (1b bis 1d) bzw. an die jeweilige Datensenke (3b) weiterleiten,
- wobei zumindest ein Teil der Datenpakete (P) geschützte Datenpakete sind,

**dadurch gekennzeichnet,**
**dass** bei geschützten Datenpaketen eine jeweilige Zeitdifferenz (Ta bis Td) zwischen dem Sendezeitpunkt (T20 bis T50) des jeweiligen Knotenpunkts (1a bis 1d) und dem Sendezeitpunkt (T20 bis T40) des vorhergehenden Knotenpunkts (1a bis 1c) bzw. im Falle des an die jeweilige Datenquelle (3a) angrenzenden jeweiligen Knotenpunkts (1a) des Sendezeitpunkts (T10) der jeweiligen Datenquelle (3a) einen jeweiligen vorbestimmten Wert aufweist.

2. Betriebsverfahren nach Anspruch 1,
**dadurch gekennzeichnet,**
**dass** der jeweilige vorbestimmte Wert für die Knotenpunkte (1) derselbe ist.

3. Betriebsverfahren nach Anspruch 1 oder 2,
**dadurch gekennzeichnet,**
**dass** die Knotenpunkte (1) untereinander unsynchronisiert sind.

4. Betriebsverfahren nach Anspruch 1, 2 oder 3,
**dadurch gekennzeichnet,**
**dass** der jeweilige Sendezeitpunkt (T10) für die Datenquellen (3) in einem für die jeweilige Datenquelle (3) vorbestimmten jeweiligen Teilintervall (TI) einer Periode (TP) liegt, insbesondere zu Beginn des jeweiligen Teilintervalls (TI), und dass die Datenquellen (3) untereinander synchronisiert sind.

5. Datenübertragungsnetz, das eine Anzahl von Datenquellen (3) und eine Anzahl von Datensenken (3) aufweist, die über eine Mehrzahl von Knotenpunkten (1) des Datenübertragungsnetzes miteinander verbunden sind, wobei die Datenquellen (3) und die Knotenpunkte (ein) derart parametriert sind, dass sie im Betrieb gemäß einem Betriebsverfahren nach einem der obigen Ansprüche miteinander zusammenwirken.

FIG 1

EP 3 432 528 A1

# FIG 2

FIG 3

FIG 4

FIG 5

**Europäisches Patentamt**
**European Patent Office**
**Office européen des brevets**

# EUROPÄISCHER RECHERCHENBERICHT

Nummer der Anmeldung

EP 17 18 2300

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 00/08800 A2 (JUNIPER NETWORKS [US]) 17. Februar 2000 (2000-02-17) * Seite 1, Zeile 1 - Seite 2, Zeile 4 * * Seite 3, Zeilen 2-17 * * Seite 5, Zeile 18 - Seite 6, Zeile 13 * * Seite 11, Zeile 11 - Seite 12, Zeile 3 * ----- | 1-5 | INV. H04L12/841 ADD. H04L12/851 |
| X | EP 0 551 475 A1 (PLESSEY TELECOMM [GB]) 21. Juli 1993 (1993-07-21) * Absätze [0005], [0010], [0012], [0028], [0050], [0051], [0061] - [0063] * ----- | 1-5 | |

RECHERCHIERTE SACHGEBIETE (IPC)

H04L

Der vorliegende Recherchenbericht wurde für alle Patentansprüche erstellt

| Recherchenort | Abschlußdatum der Recherche | Prüfer |
|---|---|---|
| Den Haag | 23. Januar 2018 | Weinmiller, Jost |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 17 18 2300

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-01-2018

| Im Recherchenbericht angeführtes Patentdokument | Datum der Veröffentlichung | Mitglied(er) der Patentfamilie | Datum der Veröffentlichung |
|---|---|---|---|
| WO 0008800 A2 | 17-02-2000 | US 6636518 B1<br>WO 0008800 A2 | 21-10-2003<br>17-02-2000 |
| EP 0551475 A1 | 21-07-1993 | DE 69230217 D1<br>DE 69230217 T2<br>DE 69233588 T2<br>EP 0551475 A1<br>EP 0858192 A2<br>ES 2137192 T3<br>GB 2258366 A<br>JP 3328780 B2<br>JP 3505658 B2<br>JP H06501831 A<br>JP 2002335272 A<br>US 5459724 A<br>WO 9303567 A1 | 02-12-1999<br>23-03-2000<br>10-08-2006<br>21-07-1993<br>12-08-1998<br>16-12-1999<br>03-02-1993<br>30-09-2002<br>08-03-2004<br>24-02-1994<br>22-11-2002<br>17-10-1995<br>18-02-1993 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016110327 A1

- EP 3038325 A1